# EUROPÄISCHE PATENTANMELDUNG

(11) **EP 2 889 446 A1**
(43) Veröffentlichungstag der Anmeldung: **01.07.2015**
(21) Anmeldenummer: 14189649.8
(22) Anmeldetag: 21.10.2014
(51) Int. Cl.: E05F 15/70, E05F 15/73, B60N 3/02, B60R 13/02, B60J 5/10, E05B 85/12

(54) **Heckklappe eines Fahrzeugs, Griffmodul für eine derartige Heckklappe sowie Fahrzeug dazu**

(30) Priorität: 30.12.2013 DE 102013227211
(71) Anmelder: Volkswagen Aktiengesellschaft, 38440 Wolfsburg (DE)
(72) Erfinder: Koch, Christian, 38116 Braunschweig (DE); Laufeld, Philipp, 13597 Berlin (DE)

(57) **Zusammenfassung**

Vorgeschlagen wird u.a. eine motorisch betriebene Heckklappe (2) eines Fahrzeugs (1), insbesondere Kraftfahrzeugs, mit einem bei geöffneter Heckklappe (2) sichtbaren und manuell zu betätigenden Zuziehgriff (5) und mit wenigstens einem elektrischen Taster (7) oder Schalter zumindest zur Aktivierung einer motorischen Schließfunktion für die Heckklappe (2). Vorteilhaft ist der wenigstens eine Taster (7) oder Schalter in den Zuziehgriff (5) integriert.

## Beschreibung

Die Erfindung betrifft eine motorisch betriebene Heckklappe eines Fahrzeugs nach dem Oberbegriff des Patentanspruchs 1 der Erfindung. Des Weiteren betrifft die Erfindung gemäß Anspruch 8 bzw. 9 ein Griffmodul für eine Heckklappe eines Fahrzeugs. Gemäß Anspruch 10 der Erfindung betrifft dieselbe ferner ein Fahrzeug, insbesondere Kraftfahrzeug, mit einer Heckklappe bzw. mit einem Griffmodul.

Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Seit geraumer Zeit ist es bekannt, die Heckklappe eines Kraftfahrzeugs motorisch, insbesondere elektromechanisch zu verriegeln und zu entriegeln. Die Ver- und Entriegelung erfolgt beispielsweise durch Betätigung einer Zentralverriegelung mittels eines Bedienelements, wie eines Tasters oder Schalters in der Fahrgastzelle des Fahrzeugs oder mittels einer Funkfernbedienung. Darüber hinaus ist aus der DE 10 2005 017 448 A1 eine Vorrichtung zur Handhabung einer Heckklappe bekannt, welche eine Griffleiste umfasst, die Elektronikkomponenten zur Betätigung einer elektromechanischen Entriegelung der Heckklappe von Fahrzeug-außen über eine tastempfindliche Betätigungsmatte und zur elektrischen Versorgung von der Griffleiste zugeordneten Beleuchtungsmitteln aufweist. Aus der EP 1 039 077 A2 ist des Weiteren eine Heckklappe eines Kraftfahrzeugs bekannt, welche einen Betätigungsgriff aufweist, der bei geschlossener Heckklappe von Fahrzeug-innen betätigbar ist, um die Heckklappe von innen zu öffnen. Dem Betätigungsgriff kann jede Vorrichtung zur manuellen Eingabe, wie ein Knopf, ein Schalter oder eine Touch-Oberfläche zugeordnet sein, um einen Auslösemechanismus zum Öffnen der Heckklappe zu aktivieren. Überdies sind Heckklappen an Fahrzeugen, insbesondere Kraftfahrzeugen bekannt, die zum selbsttätigen Öffnen und Schließen motorisch betrieben sind. Hierzu können Elektro-, Hydraulik- oder Pneumatikmotoren Anwendung finden (DE 37 44 083 A1, DE 196 15 021 A1, EP 0 959 212 A1).

Um eine Heckklappe manuell schließen zu können, weist dieselbe an ihrer Innenseite zumindest einen Zuziehgriff auf (vgl. z.B. DE 37 19 273 A1). Auch die besagten motorisch betriebenen Heckklappen werden überwiegend mit wenigstens einem solchen Zuziehgriff ausgestattet, um neben dem motorischen auch ein manuelles Schließen der Heckklappe zu ermöglichen. Insoweit ist bei einem öffentlich vertriebenen Fahrzeug an der Innenseite respektive an einer Innenverkleidung der Heckklappe zum einen zumindest ein Zuziehgriff und zum anderen zum motorischen Schließen der Heckklappe wenigstens ein Taster oder Schalter vorgesehen, der bei geöffneter Heckklappe von Fahrzeug-hinten zugänglich und betätigbar ist.

Aufgabe der Erfindung ist es, eine motorisch betriebene Heckklappe eines Fahrzeugs, insbesondere Kraftfahrzeugs, mit einem bei geöffneter Heckklappe sichtbaren und manuell zu betätigenden Zuziehgriff und mit wenigstens einem elektrischen Taster oder Schalter zumindest zur Aktivierung einer motorischen Schließfunktion für die Heckklappe zu schaffen, bei der im Hinblick auf den Stand der Technik der Material- und Montageaufwand minimiert ist. Des Weiteren ist es Aufgabe der Erfindung, ein Griffmodul für eine derartige Heckklappe sowie ein Fahrzeug, insbesondere Kraftfahrzeug, mit einer derartigen Heckklappe bzw. mit einem derartigen Griffmodul bereitzustellen.

Ausgehend von einer motorisch betriebenen Heckklappe eines Fahrzeugs, insbesondere Kraftfahrzeugs, mit einem bei geöffneter Heckklappe sichtbaren und manuell zu betätigenden Zuziehgriff und mit wenigstens einem elektrischen Taster oder Schalter zumindest zur Aktivierung einer motorischen Schließfunktion für die Heckklappe, wird die gestellte Aufgabe dadurch gelöst, dass der wenigstens eine Taster oder Schalter in den Zuziehgriff integriert ist.

Durch diese Maßnahme ist zum einen der Materialaufwand insbesondere für den wenigstens einen Taster oder Schalter vorteilhaft minimiert, da etwaige erforderliche Rahmen- und/oder Versteifungsteile für den Taster oder Schalter ohnehin durch den meist relativ steif ausgeführten Zuziehgriff bereitgestellt werden können. Zum anderen ist eine herkömmlich für den Taster oder Schalter vorzubereitende Öffnung in der Heckklappe entbehrlich. Überdies ist der Montageaufwand insbesondere während der Endmontage minimiert. Zuziehgriff und Taster oder Schalter können in einem Arbeitsschritt an der Heckklappe montiert werden. Ferner sind nunmehr Zuziehgriff und Taster oder Schalter ergonomisch günstig an einem gemeinsamen Platz angeordnet.

Die Unteransprüche beschreiben bevorzugte Weiterbildungen oder Ausgestaltungen der Erfindung.

Danach ist der Zuziehgriff an einer Innenverkleidung der Heckklappe angeordnet, die bei geöffneter Heckklappe im unmittelbaren Blickfeld des hinter dem Fahrzeug stehenden Bedieners der Heckklappe, welches der Fahrzeugführer sein kann, liegt. Hierdurch sind der Zuziehgriff sowie der integrierte Taster oder Schalter sofort ersichtlich und leicht erreichbar. Die besagte Innenverkleidung besteht überwiegend aus einem Kunststoff, welches die Einbindung des besonders ausgebildeten Zuziehgriffs in die Innenverkleidung vereinfacht. Um eine leichte Handhabung des Zuziehgriffes zu ermöglichen, überspannt derselbe brückenartig eine in die Innenverkleidung der Heckklappe eingeformte, eingebaute oder einbaubare Griffschale. Durch diese Maßnahme ist der Zuziehgriff vorteilhaft in die Ebene der sichtbaren Oberfläche der Innenverkleidung der Heckklappe integrierbar, wodurch erhöhter Bauraum für den Zuziehgriff vermieden ist. Der Zuziehgriff weist bei geöffneter Heckklappe eine nach Fahrzeug-hinten weisende und demgemäß unmittelbar vom hinter dem Fahrzeug stehenden Bediener der Heckklappe ersichtliche Sichtfläche auf, auf welcher der wenigstens eine Taster oder Schalter vorteilhafterweise angeordnet ist. Alternativ kann der Taster oder Schalter auch auf einer Grifffläche des Zuziehgriffes angeordnet sein, die bei geöffneter Heckklappe ausgehend von der vorerwähnten und nach Fahrzeug-hinten weisenden Sichtfläche nach Fahrzeug-vorn bzw. zur Griffschale hin abgewinkelt ist. Die Grifffläche kann sich dabei rechtwinklig oder in einem anderen geeigneten Winkel zur besagten Sichtfläche an dieselbe anschließen. Um den Montageaufwand für den Zuziehgriff und den wenigstens einen Taster oder Schalter besonders wirkungsvoll zu minimieren, bildet der Zuziehgriff mit dem wenigstens einen Taster oder Schalter ein vormontiertes Griffmodul aus. Ist fernerhin eine in die Innenverkleidung der Heckklappe einbaubare oder eingebaute Griffschale vorgesehen, bildet dieselbe vorteilhaft mit dem Zuziehgriff und dem wenigstens einen in denselben integrierten Taster oder Schalter ein vormontiertes Griffmodul aus.

Die Erfindung betrifft auch ein Griffmodul für eine Heckklappe eines Fahrzeugs, insbesondere Kraftfahrzeugs, mit einem Zuziehgriff und mit wenigstens einem in denselben integrierten Taster oder Schalter zumindest zur Aktivierung einer automatischen Schließfunktion für die Heckklappe.

Ebenso betrifft die Erfindung ein Griffmodul für eine Heckklappe eines Fahrzeugs, insbesondere Kraftfahrzeugs, mit einer in eine Innenverkleidung der Heckklappe einbaubaren oder eingebauten Griffschale, mit einem die Griffschale brückenartig überspannenden Zuziehgriff und mit wenigstens einem in den Zuziehgriff integrierten Taster oder Schalter zumindest zur Aktivierung einer automatischen Schließfunktion für die Heckklappe.

Schließlich betrifft die Erfindung auch ein Fahrzeug, insbesondere Kraftfahrzeug, mit einer Heckklappe oder mit einem Griffmodul der vorbeschriebenen Art.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: die Heckansicht eines Fahrzeugs, vorliegend Personenkraftwagens, mit einer geöffneten Heckklappe (Stand der Technik),
- Fig. 2: die Heckklappe nach Fig. 1 in einer Detailansicht mit einem Zuziehgriff und einem Taster zur Aktivierung einer motorischen Schließfunktion für die Heckklappe (Stand der Technik),
- Fig. 3: die Einzelheit "Z" nach Fig. 2 (Stand der Technik), und
- Fig. 4: eine Detailansicht eines erfindungsgemäß ausgebildeten Zuziehgriffs der Heckklappe.

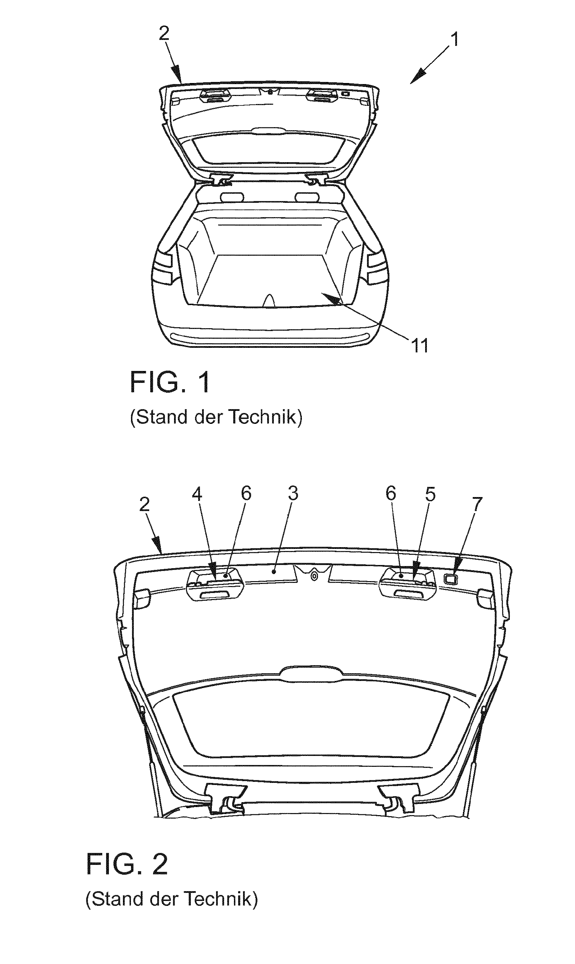

Fig. 1 zeigt zunächst die Heckansicht eines Fahrzeugs 1, vorliegend Personenkraftwagens, mit einer um eine Querachse nach oben schwenkbaren und in ihrer Offenstellung gezeigten Heckklappe 2. Die Heckklappe 2 ist motorisch, insbesondere elektromotorisch zu öffnen und zu schließen (nicht zeichnerisch dargestellt). Die Erfindung beschränkt sich jedoch nicht auf einen elektromotorischen Antrieb, sondern erfasst auch einen Hydraulik- oder Pneumatikantrieb.

Gemäß Fig. 2 weist die Heckklappe 2 eine Innenverkleidung 3 auf, die überwiegend aus einem Kunststoff besteht. In einem in der Offenstellung der Heckklappe 2 noch oben weisenden Randbereich der Innenverkleidung 3 sind ein bei geöffneter Heckklappe 2 linker und rechter, manuell zu betätigender Zuziehgriff 4, 5 sichtbar. Der Zuziehgriff 4, 5 ist stabförmig ausgebildet und überspannt brückenartig eine in die Innenverkleidung 3 eingebaute Griffschale 6.

Gemäß den Fig. 1 bis 3 ist rechts neben dem rechten Zuziehgriff 5 ein elektrischer Taster 7 oder Schalter zur Aktivierung der motorischen Schließfunktion für die Heckklappe 2 vorgesehen. Unter einem Taster 7 wird ein Bedienelement verstanden, welches durch Drücken betätigt wird und danach in seine Ausgangslage zurückkehrt. Anders als beim Schalter, der in der jeweiligen Position verbleibt, kann man bei einem Taster ohne zusätzliche Maßnahmen, wie beispielsweise einer Beleuchtung, die eine erfolgte Betätigung anzeigt, nicht optisch erkennen, ob er betätigt worden ist. Zuziehgriff 4, 5 und Taster 7 oder Schalter sind separat voneinander an der Innenverkleidung 3 der Heckklappe 2 angeordnet, woraus, wie bereits oben ausgeführt, erhöhter Material- und Montageaufwand resultiert.

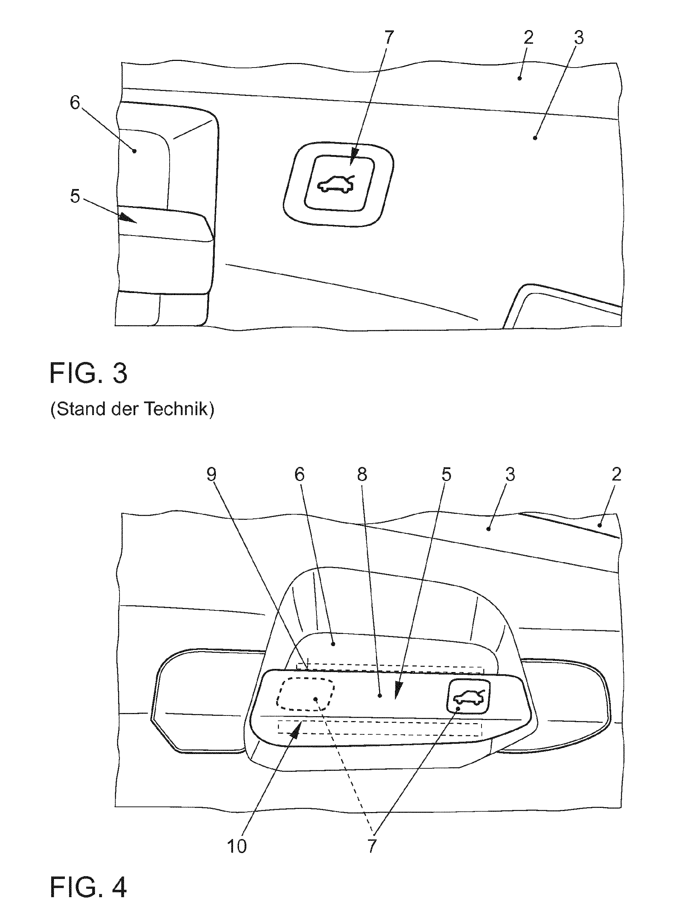

Um diesem nachteiligen Umstand zu begegnen und insbesondere besagten Material- und Montageaufwand zu verringern, ist gemäß dem aus Fig. 4 ersichtlichen Ausführungsbeispiel der Erfindung der Taster 7 oder Schalter zur Aktivierung der motorischen Schließfunktion der Heckklappe 2 beispielgebend nunmehr in den vorliegend rechten Zuziehgriff 5 integriert. Alternativ kann der Taster 7 oder Schalter selbstverständlich auch in den linken Zuziehgriff 4 integriert sein (nicht zeichnerisch dargestellt). Der Zuziehgriff 5 überspannt gemäß diesem Ausführungsbeispiel eine in die Innenverkleidung 3 der Heckklappe 2 eingeformte Griffschale 6 und zwar derart, dass die bei geöffneter Heckklappe 2 sichtbare Oberfläche der Innenverkleidung 2 in eine von Fahrzeug-hinten unmittelbar ersichtliche und weitestgehend nach Fahrzeug-hinten (+x-Richtung) weisende Sichtfläche 8 des Zuziehgriffs 5 stufenlos übergeht.

Auf der besagten Sichtfläche 8 des Zuziehgriffs 5 ist der Taster 7 oder Schalter angeordnet. Der Taster 7 ist in eine nicht zeichnerisch dargestellte Öffnung besagter Sichtfläche 8, vorliegend in einem rechten Bereich des Zuziehgriffs 5 angeordnet und befestigt. Nicht zeichnerisch dargestellte elektrische Leitungen des Tasters 7 oder Schalters sind durch einen Hohlraum im bevorzugt im Querschnitt hohlprofilartig ausgebildeten Zuziehgriff 5 hindurch zu einer nicht zeichnerisch dargestellten Klappensteuerung des Fahrzeugs 1 geführt.

Die Erfindung beschränkt sich jedoch nicht auf besagte Anordnung des Tasters 7 oder Schalters in einem rechten Bereich des Zuziehgriffes 5, sondern kann an jeder beliebigen geeigneten Stelle des Zuziehgriffes 5 angeordnet sein, beispielsweise auch in einem linken Bereich der Sichtfläche 8 des Zuziehgriffes 5, welcher durch eine gestrichelte Linienführung angedeutet ist. Darüber hinaus weist der Zuziehgriff 5 bei geöffneter Heckklappe 2 ausgehend von der weitestgehend nach Fahrzeug-hinten (+x-Richtung) weisenden Sichtfläche 8 eine obere und eine untere weitestgehend nach Fahrzeug-vorn (-x-Richtung) bzw. zur Griffschale 6 hin abgewinkelte Grifffläche 9, 10 (gestrichelte Linienführung) auf. Auch diese Griffflächen 9, 10 bieten sich zur Anordnung des Tasters 7 oder Schalters an und sind demgemäß durch die Erfindung mit erfasst.

Das vorstehend beschriebene Ausführungsbeispiel stellt auf einen Zuziehgriff 5 mit einem einzigen in denselben integrierten Taster 7 oder Schalter zum Schließen der Heckklappe 2 ab. Ergänzt werden kann besagter Taster 7 oder Schalter zum Schließen durch einen oder mehrere weitere Taster oder Schalter mit einer Sonderfunktion respektive mit einer anderen, nicht zwingend mit der Heckklappe 2 in Verbindung stehenden Funktionen des Fahrzeugs 1. Das kann lediglich beispielgebend ein nicht zeichnerisch dargestellter Taster oder Schalter einer Beleuchtung des Kofferraums 11 des Fahrzeugs 1 sein. Dieser weitere Taster oder Schalter kann mit dem Taster 7 oder Schalter für besagte Schließfunktion der Heckklappe 2 eine Baueinheit bilden oder an anderer Stelle des Zuziehgriffs 5, beispielsweise im Bereich der gestrichelt gekennzeichneten Flächen desselben angeordnet sein. Auch kann der Taster 7 oder Schalter integral mit dem rechten Zuziehgriff 5 und der weitere Taster oder Schalter integral mit dem linken Zuziehgriff 4 oder umgekehrt ausgebildet sein.

Gemäß dem aus Fig. 4 ersichtlichen Ausführungsbeispiel der Erfindung bildet der Zuziehgriff 5 mit dem Taster 7 oder Schalter zur Aktivierung einer motorischen Schließfunktion für die Heckklappe 2 ein vormontiertes Griffmodul aus, welches als Baueinheit während der Endmontage des Fahrzeugs 1 an der Innenverkleidung 3 der Heckklappe 2 form- und/oder kraftschlüssig derart befestigt wird, dass der Zuziehgriff 5 die in die Innenverkleidung 3 eingeformte Griffschale 6 brückenartig überspannt. Wird stattdessen eine in die Innenverkleidung 3 einbaubare Griffschale 6 favorisiert, bilden zweckmäßigerweise besagte Griffschale 6 samt des Zuziehgriffes 5 mit integriertem Taster 7 oder Schalter ein vormontiertes Griffmodul aus (nicht zeichnerisch dargestellt).

### Bezugszeichenliste

- 1: Fahrzeug
- 2: Heckklappe
- 3: Innenverkleidung (Heckklappe 2)
- 4: Zuziehgriff
- 5: Zuziehgriff
- 6: Griffschale
- 7: Taster
- 8: Sichtfläche (Zuziehgriff 5)
- 9: obere Grifffläche (Zuziehgriff 5)
- 10: untere Grifffläche (Zuziehgriff 5)
- 11: Kofferraum

## Patentansprüche

1. Motorisch betriebene Heckklappe (2) eines Fahrzeugs (1), insbesondere Kraftfahrzeugs, mit einem bei geöffneter Heckklappe (2) sichtbaren und manuell zu betätigenden Zuziehgriff (5) und mit wenigstens einem elektrischen Taster (7) oder Schalter zumindest zur Aktivierung einer motorischen Schließfunktion für die Heckklappe (2), **dadurch gekennzeichnet, dass** der wenigstens eine Taster (7) oder Schalter in den Zuziehgriff (5) integriert ist.

2. Heckklappe (2) nach Anspruch 1, **dadurch gekennzeichnet, dass** der Zuziehgriff (5) an einer Innenverkleidung (3) der Heckklappe (2) angeordnet ist.

3. Heckklappe (2) nach Anspruch 2, **dadurch gekennzeichnet, dass** der Zuziehgriff (5) eine in die Innenverkleidung (3) der Heckklappe (2) eingeformte, eingebaute oder einbaubare Griffschale (6) brückenartig überspannt.

4. Heckklappe (2) nach einem der Ansprüche 1 bis 3, **dadurch gekennzeichnet, dass** der Zuziehgriff (5) bei geöffneter Heckklappe (2) eine nach Fahrzeug-hinten weisende Sichtfläche (8) aufweist und der wenigstens eine Taster (7) oder Schalter auf der besagten Sichtfläche (8) angeordnet ist.

5. Heckklappe (2) nach einem der Ansprüche 1 bis 3, **dadurch gekennzeichnet, dass** der Zuziehgriff (5) bei geöffneter Heckklappe (2) ausgehend von einer nach Fahrzeug-hinten weisenden Sichtfläche (8) desselben eine nach Fahrzeug-vorn abgewinkelte Grifffläche (9, 10) aufweist und der wenigstens eine Taster (7) oder Schalter auf der besagten Grifffläche (9, 10) angeordnet ist.

6. Heckklappe (2) nach einem der Ansprüche 1 bis 5, **dadurch gekennzeichnet, dass** der Zuziehgriff (5) mit dem wenigstens einen Taster (7) oder Schalter ein vormontiertes Griffmodul ausbildet.

7. Heckklappe (2) nach einem der Ansprüche 3 bis 5, **dadurch gekennzeichnet, dass** der Zuziehgriff (5) mit der in die Innenverkleidung (3) der Heckklappe (2) einbaubaren oder eingebauten Griffschale (6) und mit dem wenigstens einen Taster (7) oder Schalter ein vormontiertes Griffmodul ausbildet.

8. Griffmodul für eine Heckklappe (2) eines Fahrzeugs (1), insbesondere Kraftfahrzeugs, mit einem Zuziehgriff (5) und mit wenigstens einem in denselben integrierten Taster (7) oder Schalter zumindest zur Aktivierung einer automatischen Schließfunktion für die Heckklappe (2).

9. Griffmodul für eine Heckklappe (2) eines Fahrzeugs (1), insbesondere Kraftfahrzeugs, mit einer in eine Innenverkleidung (3) der Heckklappe (2) einbaubaren oder eingebauten Griffschale (6), mit einem die Griffschale (6) brückenartig überspannenden Zuziehgriff (5) und mit wenigstens einem in den Zuziehgriff (5) integrierten Taster (7) oder Schalter zumindest zur Aktivierung einer automatischen Schließfunktion für die Heckklappe (2).

10. Fahrzeug (1), insbesondere Kraftfahrzeug, mit einer Heckklappe (2) nach einem der Ansprüche 1 bis 7 oder mit einem Griffmodul nach Anspruch 8 oder 9.
